# EUROPÄISCHE PATENTSCHRIFT

(11) **EP 1 955 877 B1**
(45) Veröffentlichungstag und Bekanntmachung des Hinweises auf die Patenterteilung: **14.05.2014**
(21) Anmeldenummer: 07024358.9
(22) Anmeldetag: 15.12.2007
(51) Int. Cl.: B60G 21/055

(54) **Kraftfahrzeug mit einem Fahrzeugaufbau und mit einem Fahrwerk**
Motor vehicle with a vehicle body and a chassis
Véhicule automobile doté d'une carrosserie et d'un châssis

(30) Priorität: 09.02.2007 DE 102007006589
(43) Veröffentlichungstag der Anmeldung: 13.08.2008
(73) Patentinhaber: Dr. Ing. h.c. F. Porsche AG, 70435 Stuttgart (DE)
(72) Erfinder: Becker, Michael, 71229 Leonberg/Warmbronn (DE); Dietz, Matthias, 74321 Bietigheim-Bissingen (DE); Schulz, Achim, 75223 Niefern-Öschelbronn (DE); Koch, Thorsten, 71701 Schwieberdingen (DE); Hunn, Thomas, 71272 Renningen (DE)

(56) Entgegenhaltungen:
- EP-A1- 1 609 634
- EP-A1- 1 679 209
- DE-A1- 19 702 241
- JP-A- 2006 088 752
- US-A1- 2004 090 019

## Beschreibung

Die Erfindung betrifft ein Kraftfahrzeug mit einem Fahrzeugaufbau und mit einem Fahrwerk, welches mindestens eine Radaufhängevorrichtung für jeweils zwei sich gegenüberliegende Räder aufweist, wobei jedem dieser Räder eine Stellvorrichtung zugeordnet ist, wobei diese Stellvorrichtungen mittels eines Stabilisators miteinander gekoppelt sind, wobei mindestens zwei Stabilisatorlager zur drehbaren Lagerung des Stabilisators vorgesehen sind, wobei mindestens eine Koppelvorrichtung zur veränderlichen Momenten-Abstützung des Stabilisators am Fahrzeugaufbau vorgesehen ist.

Die US 2004/0090019 A1 beschreibt eine Anordnung mit zwei Stoßdämpfern für sich gegenüberliegende Räder eines Kraftfahrzeugs, wobei an den Stoßdämpfern jeweils eine hydraulische Stellvorrichtung angeordnet ist, wobei die hydraulischen Stellvorrichtungen mittels eines drehbar gelagerten Torsionsstabilisators miteinander verbunden sind.

Die EP 1 609 634 A1 beschreibt ein Fahrwerk für ein Kraftfahrzeug, mit mindestens einer Radaufhängungseinrichtung für jeweils zwei sich gegenüberliegende Räder, wobei die oder jede Radaufhängungseinrichtung einen Stabilisator oder mindestens ein Element mit Drehfedereigenschaften aufweist, wobei der Stabilisator oder das oder jedes Element zwischen den sich gegenüber liegenden Rädern angeordnet und an einer Karosserie des Kraftfahrzeugs fixiert ist, wobei am Stabilisator oder an dem oder jedem Element mit Drehfedereigenschaften für jedes Rad mindestens eine Stelleinrichtung zur Gewährleistung einer Niveauänderung des Kraftfahrzeugs angreift.

Aus der JP 2006 088752 A ist ein Kraftfahrzeug der eingangs genannten Gattung bekannt. Die vorbekannte Vorrichtung gleicht eine Differenz der Fahrzeughöhe zwischen rechten und linken Rädern aus, so lange diese besteht.

Aufgabe der vorliegenden Erfindung ist es, für ein Kraftfahrzeug der eingangs genannten Art eine funktionsgerechte Niveauverstellung bereit zu stellen, wobei ein zuverlässiger Betrieb sowie eine robuste, Platz und Gewicht sparende Konstruktion sichergestellt sind.

Diese Aufgabe wird erfindungsgemäß gelöst durch die Merkmale des unabhängigen Patentanspruchs 1. Vorteilhafte Weiterbildungen der Erfindung sind Gegenstand der abhängigen Patentansprüche.

Ein Kraftfahrzeug der eingangs genannten Art weist eine Koppelvorrichtung zur veränderlichen Momenten-Abstützung des Stabilisators am Fahrzeugaufbau auf. Durch die veränderliche Momenten-Abstützung des Stabilisators wird ermöglicht, dass der Stabilisator in einem ersten Betriebsmodus, d.h. bei normaler Fahrt, gegenüber dem Fahrwerk zumindest weitestgehend frei drehbar gelagert ist. In einem weiteren Betriebsmodus, insbesondere wenn eine Höhenverstellung des Fahrzeugaufbaus gegenüber dem Untergrund bzw. gegenüber den Rädern erwünscht ist, kann eine Klemmung des Stabilisators gegenüber dem Fahrzeugaufbau erfolgen.

Mit Vorteil kann das Kraftfahrzeug derart ausgebildet sein, dass das Niveau des Fahrzeugaufbaus gegenüber den Rädern durch gleichsinnige Betätigung der Stelleinrichtungen und durch Blockieren des Stabilisators, also durch Klemmung des Stabilisators gegenüber dem Fahrzeugaufbau, angehoben werden kann. Das Anheben des Fahrzeugaufbaus gegenüber den Rädern kann in bestimmten Situationen äußerst vorteilhaft sein. Derartige Situationen können z.B. beim Einfahren in ein Parkhaus, im Zusammenhang mit dem Befahren einer Rampe oder beim Überfahren von Bodenschwellern auftreten. Das Anheben des Fahrzeugaufbaus erfolgt insbesondere im Bereich der beiden sich gegenüberliegenden Räder.

Mit Vorteil können hydraulische Stellvorrichtungen vorgesehen sein.

Mit Vorteil können elektromechanische Stellvorrichtungen vorgesehen sein.

Mit Vorteil können die Stellvorrichtungen zur Wankstabilisierung hergerichtet sein. Eine Wankstabilisierung unter Zuhilfenahme der Stellvorrichtungen kann ggf. bei bewegtem Kraftfahrzeug im normalen Fahrbetrieb erfolgen. In bestimmten Situationen, wie z.B. in den bereits vorangehend angegebenen Situationen, kann ein Anheben des Fahrzeugaufbaus unter Zuhilfenahme dieser Stellvorrichtungen erfolgen.

Mit Vorteil kann die Koppelvorrichtung zur veränderlichen Momenten-Abstützung des Stabilisators im vorderen Bereich, d.h. im Bereich einer Vorderachse, des Kraftfahrzeugs angeordnet sein.

Mit Vorteil kann die Koppelvorrichtung im Bereich zwischen den zwei Stabilisatorlagern angeordnet sein.

In vorteilhafter Weiterbildung der Erfindung kann die Koppelvorrichtung in der Mitte des Stabilisators angeordnet sein. Dies kann insbesondere dann zweckmäßig sein, wenn genau eine Koppelvorrichtung für den Stabilisator vorgesehen ist.

Mit Vorteil kann die Koppelvorrichtung zur Momenten-Abstützung des Stabilisators eine schaltbare Blockiervorrichtung aufweisen. Durch eine derartige, vorzugsweise aktiv ausgebildete Blockiervorrichtung kann zwischen einem ersten Betriebsfall, in dem der Stabilisator gegenüber dem Fahrzeugaufbau in den Stabilisatorlagern frei drehbar ist und einen zweiten Betriebsfall, in dem der Stabilisator mittels der Koppelvorrichtung gegenüber dem Fahrzeugaufbau blockiert bzw. geklemmt ist, umgeschaltet werden.

Mit Vorteil kann der Stabilisator mittels Formschluss blockierbar sein.

Es kann von Vorteil sein, wenn der Stabilisator dazu im Bereich der Koppelvorrichtung Formschlusselemente aufweist.

In vorteilhafter Weiterbildung der Erfindung kann der Stabilisator alternativ oder zusätzlich zum Formschluss mittels Reibschluss blockierbar sein.

Mit Vorteil kann die Koppelvorrichtung dabei drehbar gelagerte Klemmstücke aufweisen.

Mit Vorteil können die Klemmstücke zum Blockieren des Stabilisators zumindest teilweise mit einer Gummierung versehen sein.

Mit Vorteil können die Klemmstücke unter Zuhilfenahme mindestens eines Schneckenantriebs drehbar sein.

Mit Vorteil kann der Stabilisator im Bereich der Klemmstücke in seinem Durchmesser aufgeweitet sein.

In vorteilhafter Weiterbildung der Erfindung kann zum Blockieren und/oder zum Freigeben des Stabilisators mindestens ein Elektromotor vorgesehen sein.

Mit Vorteil kann die Koppelvorrichtung einen mit dem Stabilisator verbundenen Hebel aufweisen, welcher zumindest mittels eines Aktuators, z.B. ein Hydraulikzylinder, mit dem Fahrzeugaufbau verbunden sein kann.

Mit Vorteil kann eine Steuervorrichtung zur Ansteuerung der Stellvorrichtungen und zur Ansteuerung der Koppelvorrichtung vorgesehen sein.

In vorteilhafter Weiterbildung der Erfindung kann die Koppelvorrichtung zur veränderlichen Momenten-Abstützung des Stabilisators mindestens eine Federvorrichtung aufweisen. Eine derartige passive Koppelvorrichtung zeichnet sich durch eine einfache Konstruktion aus, wobei auf eine Ansteuerung der Koppelvorrichtung verzichtet werden kann. Die Federvorrichtung ist vorzugsweise als weiche Feder ausgebildet.

Mit Vorteil kann die Federvorrichtung als im wesentlichen parallel zum Stabilisator angeordnete Drehstabfeder ausgebildet sein.

Mit Vorteil kann die Drehstabfeder in ihrer Mitte mit dem Stabilisator drehfest verbunden sein.

Mit Vorteil kann die Drehstabfeder an Ihren Enden mit aufbaufesten Mitnahmen gekoppelt sein.

Mit Vorteil kann die Federvorrichtung als Blattfeder ausgebildet sein.

Mit Vorteil kann die Blattfeder mittig am Stabilisator angeordnet sein.

Weitere Einzelheiten und Vorteile der Erfindung werden nachfolgend beispielhaft unter Bezugnahme auf die Zeichnungen erläutert. Es zeigen, jeweils schematisch,
- Fig. 1: einen zwischen zwei sich gegenüberliegenden Rädern angeordneten Stabilisator,
- Fig. 2: eine Koppelvorrichtung mit schaltbarer Blockiervorrichtung,
- Fig. 3: einen Schnitt durch einen Stabilisator mit Formschlusselementen,
- Fig. 4: eine Anordnung zum Blockieren eines Stabilisators mittels Reibschluss,
- Fig. 5: eine Koppelvorrichtung mit Klemmstücken,
- Fig. 6: eine Koppelvorrichtung mit Klemmstücken,
- Fig. 7: eine Anordnung zum Blockieren eines Stabilisators mittels Formschluss,
- Fig. 8: eine Koppelvorrichtung mit einem mit dem Stabilisator verbundenen Hebel und mit einem mit dem Hebel verbundenen Aktuator,
- Fig. 9: einen Stabilisator mit parallel angeordneter Drehstabfeder,
- Fig. 10: einen Stabilisator mit parallel angeordneter und als Blechprofil ausgebildeter Drehstabfeder,
- Fig. 11: einen Stabilisator mit einer mittig angreifenden Blattfeder.

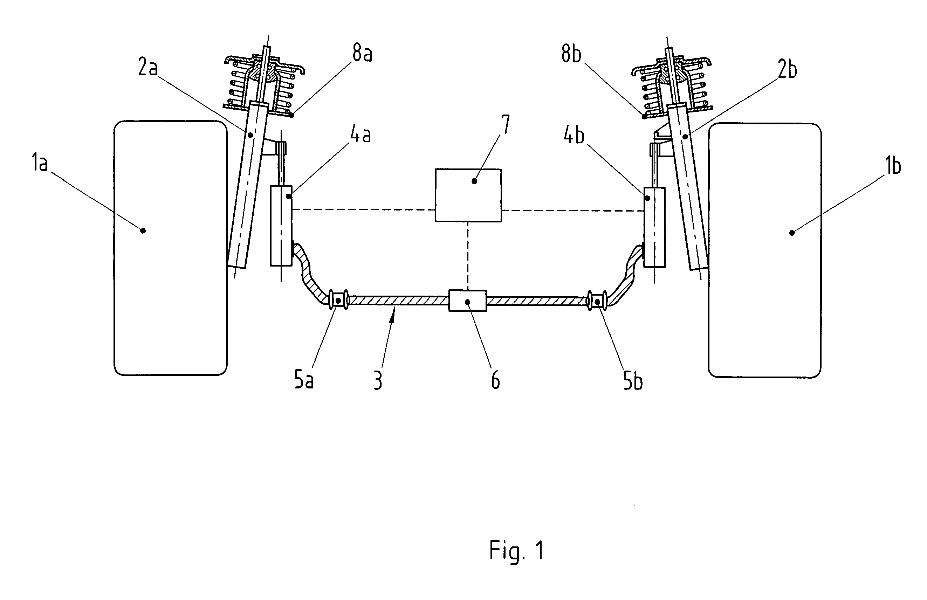

Fig. 1 zeigt zwei sich gegenüberliegende Räder 1a, 1b eines Kraftfahrzeugs. Je Rad 1a, 1b ist ein Federbein 2a, 2b vorgesehen. Die Federbeine 2a, 2b können beispielsweise als McPherson-Federbeine ausgebildet sein. Jedem Rad 1a, 1b ist jeweils eine Stellvorrichtung 4a, 4b zugeordnet. Im gezeigten Beispiel sind die lediglich schematisch dargestellten Stellvorrichtungen 4a, 4b als hydraulische Stellvorrichtungen 4a, 4b ausgebildet. Die Stellvorrichtungen 4a, 4b sind vorzugsweise mit den entsprechenden Federbeinen 2a, 2b verbunden. Anders als in der Zeichnung dargestellt, kann eine Stellvorrichtung 4a, 4b z.B. mit einer Lasche am Federteller 8a, 8b eines Federbeins 2a, 2b, vorzugsweise angeschweißt, verbunden sein. Die den sich gegenüberliegenden Rädern 1a, 1b zugeordneten Stellvorrichtungen 4a, 4b sind mittels eines Stabilisators 3 miteinander gekoppelt. Die Verbindung zwischen dem Stabilisator 3 und den Stellvorrichtungen 4a, 4b kann z.B. unter Zuhilfenahme von jeweils mindestens einem, vorzugsweise integrierten, in der Zeichnung nicht näher dargestellten Kugelgelenk erfolgen. Auch zur Verbindung der Stellvorrichtungen 4a, 4b mit den Federbeinen 2a, 2b kann jeweils mindestens ein, vorzugsweise integriertes, Kugelgelenk vorgesehen sein. Der Stabilisator 3 ist im gezeigten Beispiel ungeteilt ausgeführt und unter Verwendung von mindestens zwei Stabilisatorlagern 5a, 5b drehbar gelagert. Die Stabilisatorlager 5a, 5b weisen vorzugsweise eine geringe Torsionssteifigkeit auf und lassen eine Verdrehung von beispielsweise größer ca. 40° zu. Zur veränderlichen Momenten-Abstützung des Stabilisators 3 ist eine Koppelvorrichtung 6 vorgesehen, die im gezeigten Beispiel im Bereich der Mitte des Stabilisator 3 angeordnet ist. Zur Ansteuerung der Stellvorrichtungen 4a, 4b ist im gezeigten Beispiel eine Steuervorrichtung 7 vorgesehen. Zur Höhenverstellung des Fahrzeugaufbaus mittels der Stellvorrichtungen 4a, 4b erfolgt eine Momenten-Abstützung des Stabilisators 3 gegenüber dem Fahrzeugaufbau, d.h. eine Blockierung bzw. Klemmung des Stabilisators 3 mithilfe der Koppelvorrichtung 6. Zur Höhenverstellung werden die Stellvorrichtungen 4a, 4b gleichläufig betätigt. Es erfolgt eine Höhenverstellung des Fahrzeugaufbaus gegenüber dem Untergrund, d.h. zum Beispiel gegenüber der Fahrbahn, bzw. gegenüber den Rädern 1a, 1b. Aus Gründen der besseren Übersichtlichkeit sind weder weitere Einzelheiten des Fahrwerks wie z.B. Lenker noch der Fahrzeugaufbau in der Zeichnung näher dargestellt.

Werden die Stellvorrichtungen 4a, 4b bei gegenüber dem Fahrzeugaufbau blockierten Stabilisator 3 gleichläufig betätigt, so kann ein Reaktionsmoment vom Stabilisator 3 übertragen werden, dass sich an den Radträgern abstützt und dadurch das Fahrzeug bzw. den Fahrzeugaufbau anhebt. Die Blockierung des Stabilisators 3 gegenüber dem Fahrzeugaufbau ist im normalen Fahrbetrieb störend, da bei blockiertem Stabilisator 3 die Steifigkeiten des Stabilisators 3 und der Aufbaufederung parallel wirken und der Fahrkomfort durch eine entsprechend hart wirkende Federung stark beeinträchtigt wird.

Um eine veränderliche Momenten-Abstützung zu ermöglichen kann die Blockierung des Stabilisators gegenüber dem Fahrzeugaufbau schaltbar ausgebildet sein. Um eine veränderliche Momenten-Abstützung zu ermöglichen kann die Blockierung alternativ oder zusätzlich unter Zuhilfenahme einer Federvorrichtung erfolgen. Bei einer Koppelvorrichtung 6, die eine Federvorrichtung aufweist und nicht schaltbar ausgebildet ist, kann auf eine Verbindung der Koppelvorrichtung 6 mit der Steuervorrichtung verzichtet werden. Vorzugsweise erfolgt im normalen Fahrbetrieb im Bereich der Koppelvorrichtung 6 keine bzw. nur eine geringe Moment-Abstützung des Stabilisators gegenüber dem Fahrzeugaufbau. Im normalen Fahrbetrieb können die Stellvorrichtungen 4a, 4b auch zur Wankstabilisierung verwendet werden. Die Stellvorrichtungen 4a, 4b können dementsprechend durch die Steuervorrichtung 7 ansteuerbar sein. Vorzugsweise sind die Stellvorrichtungen 4a, 4b zur Wankstabilisierung als hydraulische Stellvorrichtungen 4a, 4b ausgebildet. Im Zusammenhang mit den beschriebenen Ausführungsbeispielen der Erfindung ist jedoch auch die Verwendung anders ausgebildeter Stellvorrichtungen 4a, 4b möglich. Die Stellvorrichtungen 4a, 4b können beispielsweise hydraulisch, elektro-hydraulisch, elektromechanisch oder magnetisch bzw. elektromagnetisch ausgebildet sein.

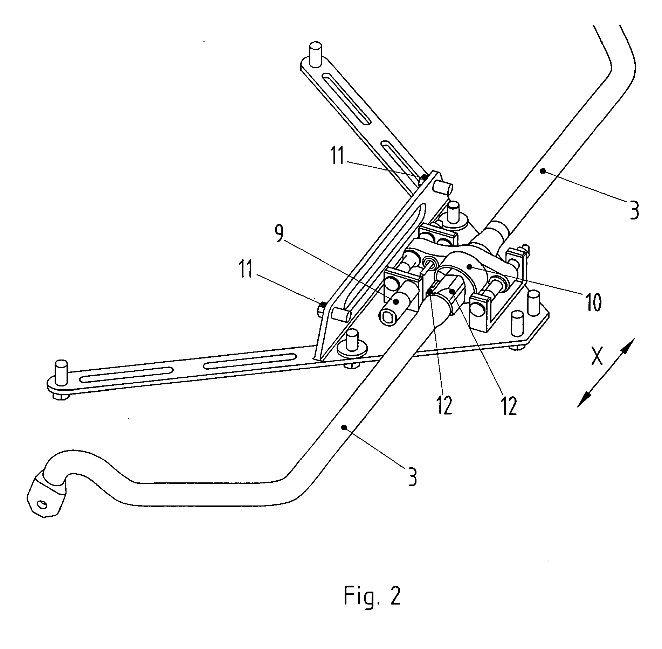

Fig. 2 zeigt ein Beispiel für eine Koppelvorrichtung 6 (siehe Fig. 1), wobei die Koppelvorrichtung 6 eine Blockiervorrichtung 10 für den Stabilisator 3 aufweist. Die Blockiervorrichtung 10 ist schaltbar ausgebildet, wobei die Blockiervorrichtung 10 beispielsweise unter Zuhilfenahme eines Elektromotors 9 vorzugsweise in Richtung x längs der Achse des Stabilisators 3 verschoben werden kann. Durch Verschieben der Blockiervorrichtung 10 in Richtung x kann ein Formschluss hergestellt werden bzw. auch wieder gelöst werden. Wird die Blockiervorrichtung 10 über am Stabilisator 3 vorgesehene Formschlusselemente 12 geschoben, so wird der Stabilisator 3 durch Formschluss blockiert und es erfolgt somit eine Momenten-Abstützung des Stabilisators 3 am Fahrzeugaufbau. Die Koppelvorrichtung 6 ist unter Zuhilfenahme von Befestigungselementen 11 mit dem Fahrzeugaufbau verbunden. Diese Verbindung erfolgt vorzugsweise im Bereich der Fahrzeugvorderachse, z.B. an einem Querträger. Der Elektromotor 9 ist beispielsweise als Wechselstrom-Motor in Verbindung mit einem Linearantrieb ausgebildet.

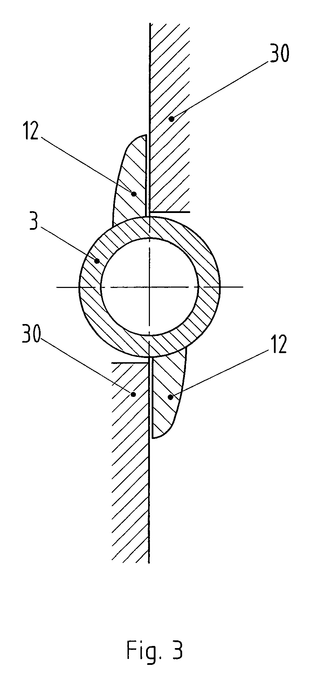

Fig. 3 zeigt einen Schnitt durch einen Stabilisator 3, wobei der Stabilisator 3 ein oder mehrere, im gezeigten Beispiel zwei Formschlusselemente 12 aufweist, welche bei entsprechender Positionierung der Blockiervorrichtung 30 mit letzterer derart zusammen wirken, dass der Stabilisator 3 gegen eine Verdrehung blockiert wird. Die Blockiervorrichtung 30 kann zur Positionierung beispielsweise längs der Achse des Stabilisators 3 verschoben werden.

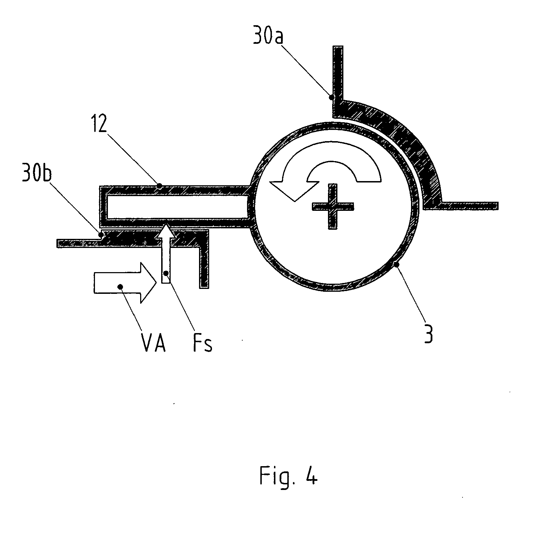

Fig. 4 zeigt in schematischer Schnittdarstellung einen Stabilisator 3 mit einem Formschlusselement 12. Zur Blockierung des Stabilisators 3 sind als Anschläge ausgebildete Blockierelemente 30a, 30b vorgesehen. Im gezeigten Beispiel ist ein feststehendes Blockierelement 30a mit zwei Anschlägen vorgesehen. Weiterhin ist ein schaltbares Blockierelement 30b vorgesehen. Im gezeigten Beispiel ist das schaltbare Blockierelement 30b längs einer Verschieberichtung VA verschiebbar ausgebildet, wodurch ein schaltbarer Anschlag für den Stabilisator 3 bereitgestellt wird. Ist die Blockierung eingeschaltet, wirkt eine Stützkraft F_{S} auf das mit dem Stabilisator 3 verbundene Formschlusselement 12.

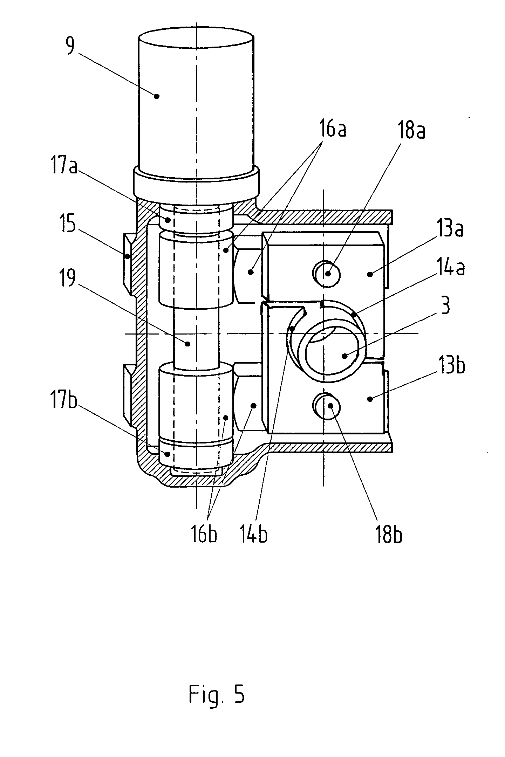

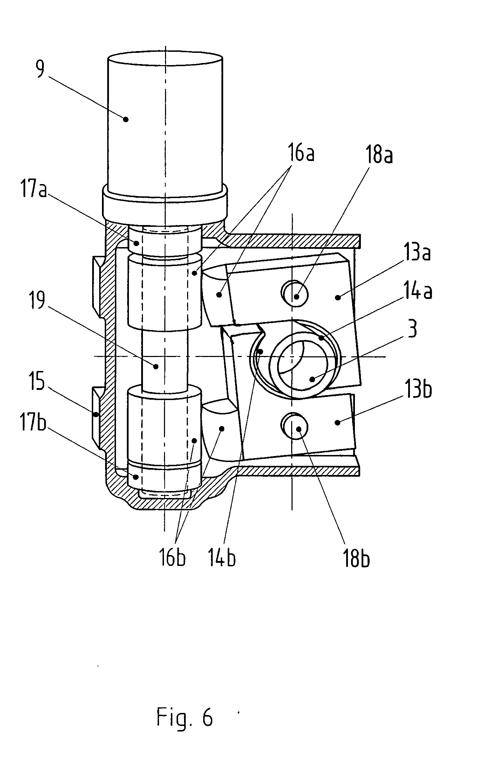

Die Fig. 5 und 6 zeigen eine Koppelvorrichtung 6 (siehe Fig. 1) mit zwei drehbar gelagerten Klemmstücken 13a, 13b, mithilfe derer der Stabilisator 3 durch Reibschluss blockiert werden kann. Die Klemmstücke 13a, 13b sind jeweils unter Zuhilfenahme von Lagerbolzen 18a, 18b drehbar gelagert. Die Klemmstücke 13a, 13b weisen dem Stabilisator 3 zugewandt jeweils eine Gummierung 14a, 14b auf. Die Klemmstücke 13a, 13b können im übrigen im wesentlichen aus einem Metall oder aus einer Metalllegierung z.B. Stahl oder Aluminium, hergestellt werden. In Fig. 5 sind die Klemmstücke 13a, 13b unverdreht dargestellt, wobei kein Reibschluss mit dem Stabilisator 3 erfolgt, d.h. es erfolgt keine Momenten-Abstützung des Stabilisators 3 gegenüber dem Fahrzeugaufbau. Durch Drehung der Klemmstücke 13a, 13b kann der Stabilisator 3 reibschlüssig blockiert werden. Die Drehung der Klemmstücke 13a, 13b erfolgt unter Zuhilfenahme von Schneckenantrieben 16a, 16b, jeweils bestehend aus einer Schnecke und einem Zahnsegment, wobei zur Betätigung der Schneckenantriebe 16a, 16b eine gemeinsame Welle 19 vorgesehen ist. Es sind Lagervorrichtungen 17a, 17b für die Welle 19 vorgesehen. Die Welle 19 kann beispielsweise durch ein Elektromotor 9, z.B. ein Wechselstrommotor, angetrieben werden. Vorzugsweise kann ein Gehäuse 15 zumindest für die Welle 19 und die Schneckenantriebe 16a, 16b vorgesehen sein.

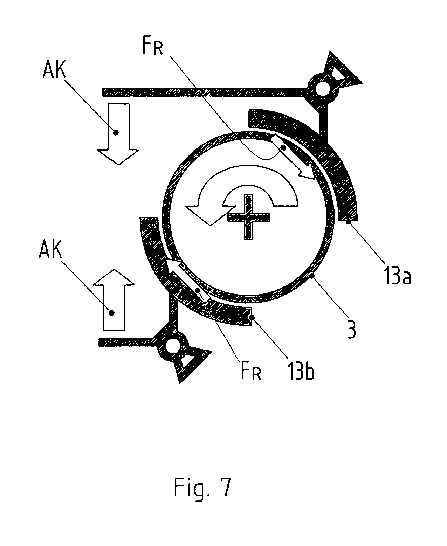

Fig. 7 zeigt schematisch und in Schnittdarstellung ein Beispiel für einen Stabilisator 3 und eine auf dem Prinzip des Reibschlusses basierende Blockiervorrichtung. Die Blockiervorrichtung wird eingeschaltet, indem eine aktive Klemmkraft AK, unter Zuhilfenahme eines Elektromotors, aufgebracht wird, wodurch die Klemmstücke 13a, 13b an den Stabilisator 3 gedrückt werden. Ein Drehmoment am Stabilisator 3 bewirkt dann eine Reibkraft F_{R} zwischen dem Stabilisator 3 und den Klemmstücken 13a, 13b, durch welche der Stabilisator 3 blockiert wird.

Insbesondere bei Verwendung einer Koppelvorrichtung 6 (siehe Fig. 1), bei welcher der Stabilisator 3 mittels Reibschluss blockiert werden kann, kann es von Vorteil sein, dass der Durchmesser des Stabilisators 3 in dem Bereich, in dem der Reibschluss erfolgt, also z.B. im Bereich der Klemmstücke 13a, 13b (siehe Fig. 5, 6 und 7), aufgeweitet ist.

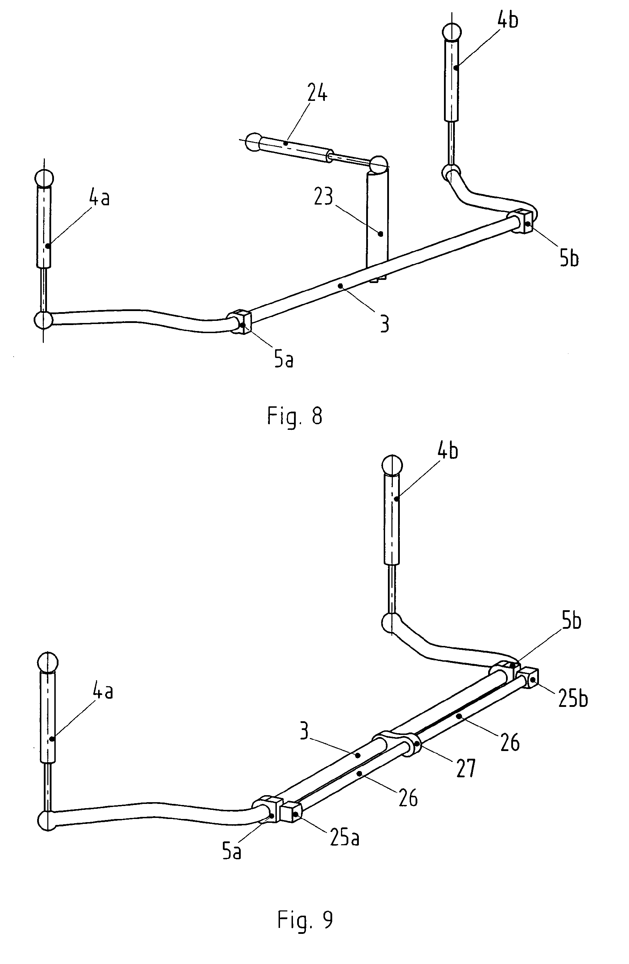

Wie in Fig. 8 beispielhaft dargestellt ist, kann die schaltbare Blockiervorrichtung auch derart ausgebildet sein, dass ein mit dem Stabilisator 3 vorzugsweise im Bereich der Mitte des Stabilisators 3 verbundener Hebel 23 vorgesehen ist, welcher zumindest mittels eines Aktuators 24 mit dem Fahrzeugaufbau verbunden ist. Der Aktuator 24 ist im normalen Fahrbetrieb freigeschaltet. Zum Anheben des Fahrzeugs wird der Aktuator 24 blockiert und die Stellvorrichtungen 4a, 4b werden gleichsinnig betätigt.

Die Fig. 9, 10 und 11 zeigen Koppelvorrichtungen 6 mit mindestens einer Federvorrichtung zur Momenten-Abstützung des Stabilisators 3 am Fahrzeugaufbau. Im normalen Fahrbetrieb ist die vorzugsweise weich ausgebildete Federvorrichtung zumindest weitestgehend ohne störende Auswirkung, da sich die Mitte des Stabilisators 3 relativ zum Fahrzeugaufbau nicht verdreht. Auch bei einer Wankstabilisierung verdreht sich die Mitte des Stabilisators 3 relativ zum Fahrzeugaufbau nicht. Es kann somit ein ungestörter Wankausgleich mittels der gegebenenfalls gegensinnig betätigten Stellvorrichtungen 4a, 4b erfolgen. Im Hinblick auf die Federung ist im normalen Fahrbetrieb die Steifigkeit des Stabilisators 3 in Reihe mit der Federvorrichtung der Koppelvorrichtung 6 als eine Tragfeder aktiv, die parallel zur eigentlichen Aufbaufeder wirkt. Die Steifigkeit der eigentlichen Aufbaufeder muss somit weicher gewählt werden, um in Summe die für den Fahrzeugaufbau gewünschte Vertikalfederrate zu erreichen.

Wie in Fig. 9 dargestellt ist, kann die Federvorrichtung als im wesentlichen parallel zum Stabilisator 3 angeordnete Drehstabfeder 26 ausgebildet sein, wobei die Drehstabfeder über eine drehfeste Verbindung 27 mit dem Stabilisator 3 verbunden ist. An den beiden den Rädern 1a, 1b (siehe Fig. 1) zugewandten Enden der im gezeigten Beispiel als Drehstabfeder 26 ausgebildeten Federvorrichtung sind aufbaufeste Mitnahmen vorgesehen.

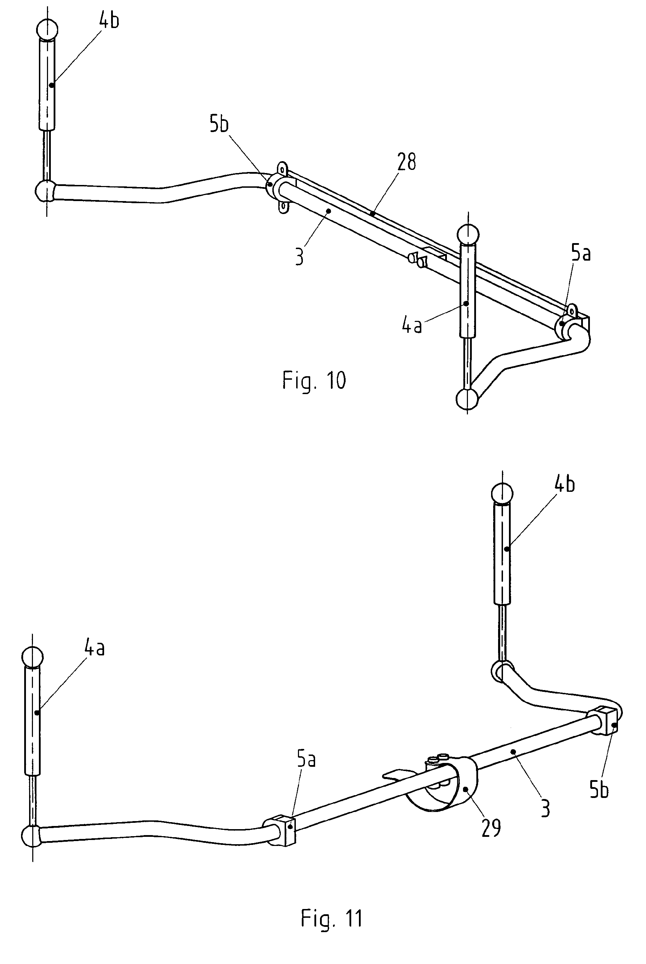

Wie in Fig. 10 gezeigt ist, kann die Federvorrichtung auch als Blechprofil 28 ausgebildet sein, welches an seinen beiden Enden integriert mit der Aufnahme der Stabilisatorlager 5a, 5b ausgebildet sein kann.

Wie in Fig. 11 dargestellt ist, kann die Federvorrichtung als Blattfeder 29, welche vorzugsweise mittig am Stabilisator 3 angreift, ausgebildet sein. Es sind auch weitere, nicht näher dargestellt Ausgestaltungen der Federvorrichtung, z.B. als Schenkelfeder, möglich.

Die erfindungsgemäße Koppelvorrichtung 6 zur veränderlichen Momenten-Abstützung des Stabilisators kann vorzugsweise im vorderen Bereich des Kraftfahrzeugs, d.h. im Bereich einer Vorderachse, angeordnet sein. Alternativ oder zusätzlich können ein oder mehrere derartige Koppelvorrichtungen 6 auch in einem anderen Bereich, z.B. im Bereich einer Hinterachse angeordnet sein.

Erfindungsgemäß wird bei robuster, Platz und Gewicht sparender Konstruktion eine zuverlässige Niveauliftfunktion bereitgestellt, die z.B. an der Vorderachse zum Spoilerschutz eingesetzt werden kann. Die Aktivierung der Niveauliftfunktion kann beispielsweise manuell bei laufendem Motor z.B. mithilfe eines Schalters erfolgen, der im Fahrzeuginnenraum z.B. in der Mittelkonsole, angeordnet sein kann. Vorzugsweise kann eine automatische Deaktivierung der Niveauliftfunktion bei Überschreiten einer bestimmten Maximalgeschwindigkeit vorgesehen sein.

Gemäß einem der wesentlichen, der Erfindung zugrunde liegenden Gedanken, kann die Koppelvorrichtung 6 zur Momenten-Abstützung des Stabilisators 3 am Fahrzeugaufbau eine schaltbare Blockiervorrichtung und/oder mindestens eine Federvorrichtung aufweisen.

## Patentansprüche

1. Kraftfahrzeug mit einem Fahrzeugaufbau und mit einem Fahrwerk, welches mindestens eine Radaufhängevorrichtung für jeweils zwei sich gegenüberliegende Räder (1a, 1b) aufweist, wobei jedem dieser Räder (1a, 1b) eine Stellvorrichtung (4a, 4b) zugeordnet ist, wobei diese Stellvorrichtungen (4a, 4b) mittels eines Stabilisators (3) miteinander gekoppelt sind, wobei mindestens zwei Stabilisatorlager (5a, 5b) zur drehbaren Lagerung des Stabilisators (3) vorgesehen sind, wobei mindestens eine Koppelvorrichtung (6) zur veränderlichen Momenten-Abstützung des Stabilisators (3) am Fahrzeugaufbau vorgesehen ist, **dadurch gekennzeichnet, dass** die Koppelvorrichtung (6) zur Momenten-Abstützung des Stabilisators (3) am Fahrzeugaufbau eine schaltbare Blockiervorrichtung aufweist,
wobei der Stabilisator (3) im Bereich der Koppelvorrichtung (6) entweder Formschlusselemente (12) aufweist und mittels Formschluss blockierbar ist oder die Koppelvorrichtung (6) drehbar gelagerte Klemmstücke (13a, 13b) aufweist und der Stabilisator (3) mittels Reibschluss blockierbar ist,
sodass das Niveau des Fahrzeugaufbaus gegenüber den Rädern (1a, 1b) durch gleichsinnige Betätigung der Stellvorrichtungen (4a, 4b) und durch Blockieren des Stabilisators (3) gegenüber dem Fahrzeugaufbau anhebbar ist.

2. Kraftfahrzeug nach Patentanspruch 1, wobei jedem der Räder (1a, 1b) mindestens eine hydraulische Stellvorrichtung (4a, 4b) zugeordnet ist.

3. Kraftfahrzeug nach Patentanspruch 1, wobei jedem der Räder (1a, 1b) mindestens eine elektromechanische Stellvorrichtung (4a, 4b) zugeordnet ist.

4. Kraftfahrzeug nach einem der vorangehenden Patentansprüche, wobei die Stellvorrichtungen (4a, 4b) zur Wankstabilisierung des Kraftfahrzeugs hergerichtet sind.

5. Kraftfahrzeug nach einem der vorangehenden Patentansprüche, wobei die Koppelvorrichtung (6) im vorderen Bereich des Kraftfahrzeugs angeordnet ist.

6. Kraftfahrzeug nach einem der vorangehenden Patentansprüche, wobei die Koppelvorrichtung (6) im Bereich zwischen den zwei Stabilisatorlagern (5a, 5b) angeordnet ist.

7. Kraftfahrzeug nach Patentanspruch 6, wobei die Koppelvorrichtung (6) in der Mitte des Stabilisators (3) angeordnet ist.

8. Kraftfahrzeug nach Patentanspruch 1, wobei die Klemmstücke (13a, 13b) zum Blockieren des Stabilisators zumindest teilweise mit einer Gummierung (14a, 14b) versehen sind.

9. Kraftfahrzeug nach Patentanspruch 1 oder 8, wobei die Klemmstücke (13a, 13b) unter Zuhilfenahme eines Schneckenantriebs drehbar sind.

10. Kraftfahrzeug nach einem der Patentansprüche 1, 8 oder 9, wobei der Durchmesser des Stabilisators (3) im Bereich der Klemmstücke (13a, 13b) aufgeweitet ist.

11. Kraftfahrzeug nach einem der vorangehenden Patentansprüche, wobei zum Blockieren und/oder zum Freigeben der Blockierung des Stabilisators (3) ein Elektromotor (9) vorgesehen ist.

12. Kraftfahrzeug nach einem der vorangehenden Patentansprüche, wobei die Koppelvorrichtung (6) einen mit dem Stabilisator (3) verbundenen Hebel (23) aufweist, welcher zumindest mittels eines Aktuators (24) mit dem Fahrzeugaufbau verbunden ist.

13. Kraftfahrzeug nach einem der vorangehenden Patentansprüche, wobei eine Steuervorrichtung (7) zur Ansteuerung der Stellvorrichtungen (4a, 4b) und zur Ansteuerung der Koppelvorrichtung (6) vorgesehen ist.

## Claims

1. Motor vehicle with a vehicle body and a chassis which has at least one wheel suspension device for two opposite wheels (1a, 1b) in each case, wherein each of said wheels (1a, 1b) is assigned an adjusting device (4a, 4b), wherein said adjusting devices (4a, 4b) are coupled to each other by means of stabilizer (3), wherein at least two stabilizer bearings (5a, 5b) are provided for the rotatable mounting of the stabilizer (3), wherein at least one coupling device (6) is provided for the variable moment support of the stabilizer (3) on the vehicle body, **characterized in that** the coupling device (6) for the moment support of the stabilizer (3) on the vehicle body has a switchable blocking device, wherein the stabilizer (3) either has interlocking elements (12) in the region of the coupling device (6) and is blockable by means of an interlocking connection, or the coupling device (6) has rotatably mounted clamping pieces (13a, 13b) and the stabilizer (3) is blockable by means of a frictional connection, and therefore the level of the vehicle body in relation to the wheels (1a, 1b) is raisable by actuation of the adjusting device (4a, 4b) in the same direction and by blocking the stabilizer (3) in relation to the vehicle body.

2. Motor vehicle according to Patent Claim 1, wherein each of the wheels (1a, 1b) is assigned at least one hydraulic adjusting device (4a, 4b).

3. Motor vehicle according to Patent Claim 1, wherein each of the wheels (1a, 1b) is assigned at least one electromechanical adjusting device (4a, 4b).

4. Motor vehicle according to one of the preceding patent claims, wherein the adjusting devices (4a, 4b) are arranged for roll stabilization of the motor vehicle.

5. Motor vehicle according to one of the preceding patent claims, wherein the coupling device (6) is arranged in the front region of the motor vehicle.

6. Motor vehicle according to one of the preceding patent claims, wherein the coupling device (6) is arranged in the region between the two stabilizer bearings (5a, 5b).

7. Motor vehicle according to Patent Claim 6, wherein the coupling device (6) is arranged in the region of the stabilizer (3).

8. Motor vehicle according to Patent Claim 1, wherein the clamping pieces (13a, 13b) for blocking the stabilizer are at least partially provided with a rubber coating (14a, 14b).

9. Motor vehicle according to Patent Claim 1 or 8, wherein the clamping pieces (13a, 13b) are rotatable with the aid of a worm drive.

10. Motor vehicle according to one of Patent Claims 1, 8 or 9, wherein the diameter of the stabilizer (3) is expanded in the region of the clamping pieces (13a, 13b).

11. Motor vehicle according to one of the preceding patent claims, wherein an electric motor (9) is provided for blocking the stabilizer (3) and/or for releasing the blocking thereof.

12. Motor vehicle according to one of the preceding patent claims, wherein the coupling device (6) has a lever (23) which is connected to the stabilizer (3) and is connected to the vehicle body at least by means of an actuator (24).

13. Motor vehicle according to one of the preceding patent claims, wherein a control device (7) is provided for activating the adjusting device (4a, 4b) and for activating the coupling device (6).

## Revendications

1. Véhicule automobile comprenant une carrosserie de véhicule et un châssis, lequel présente au moins un dispositif de suspension de roue pour chacune de deux roues opposées (1a, 1b), un dispositif de réglage (4a, 4b) étant associé à chacune de ces roues (1a, 1b), ces dispositifs de réglage (4a, 4b) étant accouplés l'un à l'autre au moyen d'un stabilisateur (3), au moins deux paliers de stabilisateur (5a, 5b) étant prévus pour le support sur palier rotatif du stabilisateur (3), au moins un dispositif d'accouplement (6) étant prévu au niveau de la carrosserie du véhicule pour le support de couple variable du stabilisateur (3), **caractérisé en ce que** le dispositif d'accouplement (6) présente un dispositif de blocage commutable pour le support de couple du stabilisateur (3) au niveau de la carrosserie du véhicule,
soit le stabilisateur (3), dans la région du dispositif d'accouplement (6), présentant des éléments d'engagement positif (12) et pouvant être bloqué par un engagement positif, soit le dispositif d'accouplement (6) présentant des pièces de serrage montées à rotation (13a, 13b) et le stabilisateur (3) pouvant être bloqué par engagement par friction,
de sorte que le niveau de la carrosserie du véhicule puisse être élevé par rapport aux roues (1a, 1b) par un actionnement dans le même sens des dispositifs de réglage (4a, 4b) et par blocage du stabilisateur (3) par rapport à la carrosserie du véhicule.

2. Véhicule automobile selon la revendication 1, dans lequel au moins un dispositif de réglage hydraulique (4a, 4b) est associé à chacune des roues (1a, 1b).

3. Véhicule automobile selon la revendication 1, dans lequel au moins un dispositif de réglage électromécanique (4a, 4b) est associé à chacune des roues (1a, 1b).

4. Véhicule automobile selon l'une quelconque des revendications précédentes, dans lequel les dispositifs de réglage (4a, 4b) sont réalisés pour assurer une stabilisation au roulis du véhicule automobile.

5. Véhicule automobile selon l'une quelconque des revendications précédentes, dans lequel le dispositif d'accouplement (6) est disposé dans la région avant du véhicule automobile.

6. Véhicule automobile selon l'une quelconque des revendications précédentes, dans lequel le dispositif d'accouplement (6) est disposé dans la région entre les deux paliers de stabilisateur (5a, 5b).

7. Véhicule automobile selon la revendication 6, dans lequel le dispositif d'accouplement (6) est disposé au milieu du stabilisateur (3).

8. Véhicule automobile selon la revendication 1, dans lequel les pièces de serrage (13a, 13b) sont prévues pour bloquer le stabilisateur au moins en partie avec un revêtement de caoutchouc (14a, 14b).

9. Véhicule automobile selon la revendication 1 ou 8, dans lequel les pièces de serrage (13a, 13b) peuvent tourner par le biais d'un entraînement à vis sans fin.

10. Véhicule automobile selon l'une quelconque des revendications 1, 8 ou 9, dans lequel le diamètre du stabilisateur (3) est élargi dans la région des pièces de serrage (13a, 13b).

11. Véhicule automobile selon l'une quelconque des revendications précédentes, dans lequel pour le blocage et/ou pour la libération du blocage du stabilisateur (3), il est prévu un moteur électrique (9).

12. Véhicule automobile selon l'une quelconque des revendications précédentes, dans lequel, le dispositif d'accouplement (6) présente un levier (23) connecté au stabilisateur (3), lequel est connecté à la carrosserie du véhicule au moins par le biais d'un actionneur (24).

13. Véhicule automobile selon l'une quelconque des revendications précédentes, dans lequel un dispositif de commande (7) est prévu pour commander les dispositifs de réglage (4a, 4b) et pour commander le dispositif d'accouplement (6).
